# EUROPEAN PATENT APPLICATION

(11) **EP 4 844 812 A1**
(43) Date of publication of application: **25.11.2026**
(21) Application number: 25177487.3
(22) Date of filing: 19.05.2025
(51) Int. Cl.: H01M 4/04, H01M 4/131, H01M 4/136, H01M 4/1391, H01M 4/1397, H01M 4/36, H01M 4/48, H01M 4/58

(54) **CORE-SHELL NANOPILLARS COMPRISING LITHIUM OR A LITHIUM-COMPOUND**

(71) Applicant: Imec VZW, 3001 Leuven (BE)
(72) Inventor: PATNAIK, Sai Gourang, 3001 Heverlee (BE); VEREECKEN, Philippe, 3321 Hoegaarden (BE); DE TAEYE, Louis, 2800 Mechelen (BE)
(74) Representative: Winger

(57) **Abstract**

In a first aspect, the present invention relates to a method comprising: a) providing a layer (10) comprising a plurality of nanopillars (20), the nanopillars (20) comprising: i) a core (30) comprising Li or a Li-compound, and ii) a shell (40) covering the core (30); and b) -after step a-replacing or chemically modifying a portion (42) of the shell (40).

## Description

### Technical field of the invention

The present invention relates to the field of nanostructured layers, and more specifically to such layers comprising Li for use in lithium-based electrochemical applications.

### Background of the invention

Lithium-ion batteries (LiBs) are widely used for applications ranging from portable electronics to electric vehicles and grid storage. The ongoing development of these batteries involves seeking materials and designs offering higher energy density, improved safety and longer cycle life.

One component which significantly impacts battery performance is the anode material. Li metal anodes are considered the holy grail for Li-ion batteries due to their promise of high volumetric capacity of about 2000 mAh/cm³. Though contemplated relatively early during Li-ion battery development, because Li metal anodes lead to the formation of dendrites (or other non-uniform growth) in liquid electrolytes, they were swiftly replaced by insertion of Li⁺ into graphite. Interest for Li metal anodes resurged with the advent of solid electrolytes, which have inherent mechanical strength and hence supress dendrite propagation. Li metal solid state batteries (LMSSB) however suffer from numerous interfacial issues at both the Li-solid electrolyte and solid electrolyte-cathode interfaces.

Li metal solid state batteries can generally be assembled in two different configurations: without or with excess Li (i.e. beyond what is supplied by the cathode). In the former case ('excess Li free'), all Li involved in the charging process originates from the cathode and any Li⁺ ion loss remains uncompensated. Parasitic side reactions-like conversion reactions with a native oxide layer on current collectors (e.g. Cu or Ni foils), reactions between the electrolyte/anode front and electrolyte/cathode front, etc.-all lead to continuous loss of active Li⁺ ions.

Conversely, when fabricating Li metal solid state batteries with excess Li-e.g. in the form of a lithium thin film (LTF), typically deposited over the anode current collector-, the excess Li can act as a 'sacrificial' lithium reservoir, which makes up for any lost Li⁺ due to the parasitic reactions. While compensating for Li⁺ loss, the use of excess Li affects the overall cell energy density, with more excess Li-e.g. proportional to the thickness of the employed Li thin film-resulting in lower energy density: without excess Li, the cell's volumetric capacity is about 2061 mAh/cm³ (i.e. the theoretical volumetric capacity of Li); with a Li thin film equal to the Li cathode thickness (i.e. '100 mol% excess Li'), the volumetric capacity drops in half to about 1030 mAh/cm³; with non-uniform growth of Li during operation-in particular after repeated cycles of Li stripping and replating-the capacity further reduces e.g. towards about 700 mAh/cm³. By comparison, the theoretical volumetric capacity of state of art graphite anodes for Li batteries (cf. supra) is about 720 mAh/cm³, but some porosity is required for electrolyte percolation so that practical graphite anodes typically have a volumetric capacity of about 550 mAh/cm³. To gain a marked advantage over contemporary graphite anodes, the sacrificial Li on the anode side should ideally be below 50 mol% excess; hence why Li thin films-e.g. in the order of 5-50 µm-are often used for this purpose.

Alongside being sufficiently thin, the Li thin films need to be dense, chemically stable with respect to the electrolyte and capable of reversible lithium plating and stripping during battery operation. The extreme reactivity of Li and its soft texture however make it challenging to produce Li thin films on large scale under ambient conditions in a cost effective manner. Several techniques are known for depositing Li thin films in the order of a few to a few tens of µm, but each comes with its own difficulties. For example, physical vapour deposition (PVD)-based techniques like sputtering and thermal evaporation suffer i.a. from high costs related to infrastructure and processing environment (for e.g. ultra-high vacuum), relatively slow growth rate of Li (depending on the type of deposition used) and limited density of the deposited Li thin film. Mechanical extrusion suffers i.a. from poor mechanical processability of soft alkali metals like Li, as they have a relatively low yield strength (about 0.7-0.8 MPa) and sticky nature so that high physical stress cannot be employed during the extrusion process. Liquid metal processing suffers i.a. from requiring high temperature operation, weak adhesion to the substrate and difficulty to prepare thin (e.g. < 30 µm) Li films.

Furthermore, Li is the strongest reducing agent among the alkali metals (-3.05 V vs SHE) and reduces most organic compounds-and several inorganic species-immediately after metallic Li is plated from the electrolyte. This yields Li-compound reduction products (R-Li, where R is an organic or inorganic component from the electrolyte) that form a SEI (solid electrolyte interface) layer. A good SEI layer is electronically insulating and Li⁺ ion conducting, thereby blocking further reduction of the electrolyte and acting as a passivation layer. However, the naturally formed Li-derivatives (e.g. Li₂O, LiOH, etc.) by reaction with the electrolyte or with atmospheric gases (O₂, CO₂, N₂ and/or H₂O) typically have limited Li⁺ conductivity, and the naturally formed SEI layers are typically not very durable. The electrochemical stability and properties of the SEI layer have a huge impact on the performance of the electrochemical cell though, so many different strategies have been explored to artificially fabricate or engineer improved SEI layers. In a basic example, a Li⁺ conducting protective coating (e.g. LiPON or LLZO) can be provided over the surface of the deposited Li thin films to: 1) slow down/stop reaction of the underlying Li with the electrolyte and/or atmospheric gases; and 2) increase the cycling stability and durability. However, mechanical failure of (planar) protective coatings over time due to the stress involved in repeated stripping/plating cycles-especially in combination with somewhat higher current (>2 mAh/cm²)-nevertheless remains an issue, leading to dendritic/non-uniform growth (cf. supra) and the associated performance issue.

Aarts et al. (AARTS, Mark, et al. Water as additive directing lithium electrodeposition. ACS Energy Letters, 2024, 9.2: 513-519.) disclosed the electrodeposition of columnar lithium layers up to 30 µm thickness. Notwithstanding that this offered some improvements, there nevertheless remains a need in the art for ways to provide (excess) Li which further address at least some of the issues outlined above.

### Summary of the invention

It is an object of the present invention to provide good methods for fabricating layers of core-shell nanopillars comprising Li or a Li-compound. It is a further object of the present invention to provide layers, electrodes, methods for operating the electrodes and electrochemical devices associated therewith. This objective is accomplished by the different aspects according to the present invention.

It is an advantage of embodiments of the present invention that the core-shell nanopillar structure helps suppress detrimental dendrite formation and non-uniform lithium growth during electrochemical cycling.

It is an advantage of embodiments of the present invention that the altered layer provides improved cycling stability and reversibility for lithium stripping and plating compared to the initial layer. It is a further advantage of embodiments of the present invention that (at least a portion of) the altered layer has an improved Li⁺ conductivity. It is yet a further advantage of embodiments of the present invention that (at least a portion of) the altered layer can have an improved chemical and/or mechanical stability.

It is an advantage of embodiments of the present invention that the shell properties can be tuned through control of the electrodeposition parameters and of the parameters used for altering (i.e. replacing and/or chemically modifying) the shell. It is a further advantage of embodiments of the present invention that the nanopillar morphology (e.g. average width) can be modulated through control of the electrodeposition parameters.

It is an advantage of embodiments of the present invention that the fabrication is scalable and cost-effective.

It is an advantage of embodiments of the present invention that the altered layer can be made so as to be compatible with liquid or solid electrolytes.

It is an advantage of embodiments of the present invention that the altered layer can be made to accommodate volume changes of the core during cycling (e.g. via a floating top portion). It is a further advantage of embodiments of the present invention that efficient Li⁺ transport can thereby be maintained.

It is an advantage of embodiments of the present invention that the shell can be altered so as to promote directed lithium ion transport during stripping and plating (e.g. by combining a more Li⁺ conductive top portion with more Li⁺ insulating side wall portions).

It is an advantage of embodiments of the present invention that the alteration of the layer can improve interfacial contact and stability.

In a first aspect, the present invention relates to a method comprising: a) providing a layer comprising a plurality of nanopillars, the nanopillars comprising: i) a core comprising Li or a Li-compound, and ii) a shell covering the core; and b) -after step a-replacing or chemically modifying a portion of the shell.

In a second aspect, the present invention relates to a layer comprising a plurality of nanopillars, obtainable by the method according to any embodiment of the first aspect.

In a third aspect, the present invention relates to an electrode comprising the layer according to any embodiment of the second aspect.

In a fourth aspect, the present invention relates to a method for operating an electrode as defined in the third aspect, comprising a sequence of: a) at least partially stripping Li from the core, and b) (re)plating the core with Li.

In a fifth aspect, the present invention relates to an electrochemical device comprising the electrode according to any embodiment of the third aspect.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG 1 schematically depicts a layer comprising a plurality of nanopillars as initially obtained; in accordance with embodiments of the present invention.
FIG 2 is a perspective view of the initial layer of FIG 1.
FIG 3 and FIG 4 schematically depict different substeps in altering a top portion of the shell; in accordance with embodiments of the present invention.
FIG 5 is a perspective view of the altered layer of FIG 4.
FIG 6 schematically depicts an electrochemical device comprising an electrode formed with an altered layer; in accordance with embodiments of the present invention.
FIG 7 schematically depicts the altered layer as in FIG 4 in a liquid electrolyte, before Li stripping (or after Li plating); in accordance with embodiments of the present invention.
FIG 8 schematically depicts the altered layer as in FIG 4 during/after Li stripping; in accordance with embodiments of the present invention.
FIG 9 is a perspective view of the layer of FIG 8.
FIG 10 and FIG 11 schematically depict different substeps in altering the entire shell; in accordance with embodiments of the present invention.
FIG 12 schematically depicts the altered layer as in FIG 11 in a liquid electrolyte, before Li stripping (or after Li plating); in accordance with embodiments of the present invention.
FIG 13 schematically depicts the altered layer as in FIG 11 in a liquid electrolyte, during/after Li stripping; in accordance with embodiments of the present invention.
FIG 14 schematically depicts the altered layer as in FIG 11 in a solid electrolyte, before Li stripping (or after Li plating); in accordance with embodiments of the present invention.
FIG 15 schematically depicts the altered layer as in FIG 11 in a solid electrolyte, during/after Li stripping; in accordance with embodiments of the present invention.
FIG 16 is a graph showing the effect of changing electrodeposition parameters on the average nanopillar width; in accordance with embodiments of the present invention.
FIG 17 and FIG 18 are SEM (scanning electron microscope) images of layers in accordance with the present invention.

In the different figures, the same reference signs refer to the same or analogous elements.

### Description of illustrative embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term 'comprising', used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term 'comprising' therefore covers the situation where only the stated features are present and the situation where these features and one or more other features are present. Thus, the scope of the expression 'a device comprising means A and B' should not be interpreted as being limited to devices consisting only of components A and B. It means that with respect to the present invention, the only relevant components of the device are A and B.

Reference throughout this specification to 'one embodiment' or 'an embodiment' means that a particular feature, structure or characteristic described in connection with the embodiment is included in at least one embodiment of the present invention. Thus, appearances of the phrases 'in one embodiment' or 'in an embodiment' in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

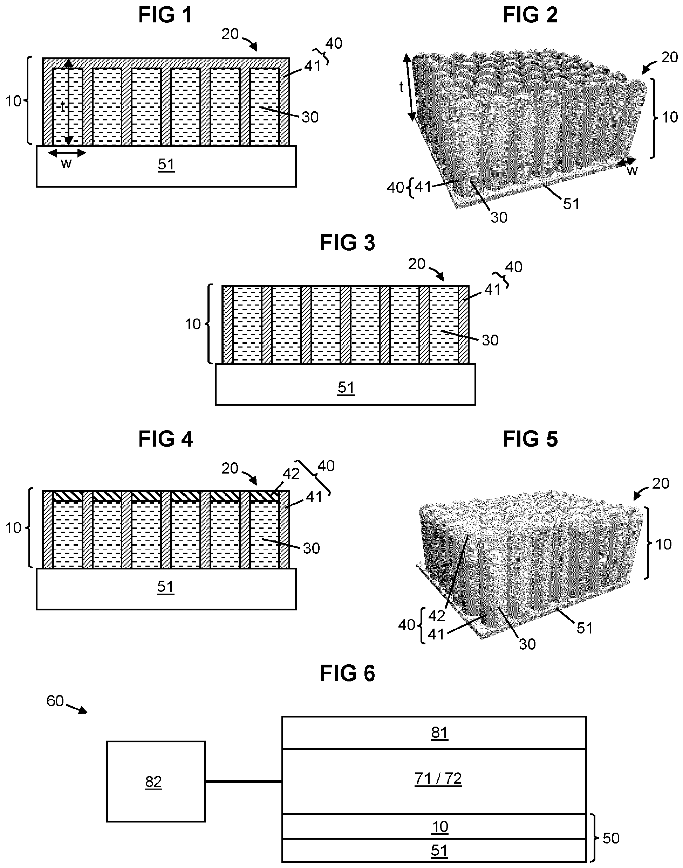

As used herein, and unless otherwise specified, the term 'nanopillars' refers to pillar-like structures having a width in the nanometre-to-micrometre scale (e.g. 5 µm or lower, preferably 3 µm or lower, more preferably 2 µm or lower, still more preferably 1 µm or lower, yet still more preferably 750 nm or lower). The width may also be referred to as 'diameter' in the case of substantially circular cross-section. Typically, a plurality (e.g. hundreds, thousands, millions, etc.) of nanopillars are arranged in an array. This could be a relatively disordered arrangement but will often naturally adopt a certain lattice-like order (e.g. substantially according to a relatively close-packed configuration). Nanopillars may often be elongated structures (i.e. they may have a height, perpendicular to their width, which is greater than said width), but this is not strictly necessary. Within the present invention, the nanopillars may often be arranged on a substrate with their height substantially perpendicular to and their width substantially parallel to the substrate (as e.g. schematically depicted in FIG 2).

As used herein, and unless otherwise specified, the expression 'Li or a Li-compound' refers to a chemical substance that is (metallic) Li or is a chemical compound that includes the element Li (e.g. a lithium titanium oxide (LTO)). A Li alloy can-depending on the nature of the alloy-be regarded either as a mixture comprising (metallic) Li or as a Li-compound (e.g. an intermetallic compound). Li alloys (e.g. Al-Li) are thus also considered to be included in 'comprising Li or a Li-compound' (either because Li is comprised in the alloy mixture or because the alloy is a Li-compound).

As used herein, and unless otherwise specified, the term 'Li⁺ conductivity' refers to the ability of a material or structure to conduct lithium ions (Li⁺). It can be quantitatively expressed in units of Siemens per centimetre (S/cm). When the Li⁺ conductivity is below 10⁻¹⁰ S/cm, the material or structure may be considered to be a poor Li⁺ conductor (e.g. Li₂O with a Li⁺ conductivity of about 10⁻¹² S/cm); from 10⁻¹⁰ S/cm to 10⁻⁶ S/cm, the material or structure may be considered to be a moderate Li⁺ conductor (e.g. Li₂CO₃ with a Li⁺ conductivity of about 10⁻⁸ S/cm); and from 10⁻⁶ S/cm and above, the material or structure may be considered to be good Li⁺ conductor (e.g. Li₃N with a Li⁺ conductivity of about 10⁻⁴ S/cm, Li₂S with a conductivity of about 10⁻⁵ S/cm or LiPON with a conductivity of about 10⁻⁶ S/cm). The Li⁺ conductivity of a material or structure can be obtained experimentally by (alternating current) impedance spectroscopy, or from scientific literature or textbooks. An example of the measurement of the ionic conductivity of a Li-compound (in particular LiPON) was described by Sepúlveda et al. (SEPÚLVEDA, Alfonso, et al. Effect of high temperature LiPON electrolyte in all solid state batteries. Solid State Ionics, 2019, 337: 24-32.; see in particular therein the third paragraph under 'Experimental Section'). Park et al. (PARK, Seongsoo, et al. Ionic conductivity and mechanical properties of the solid electrolyte interphase in lithium metal batteries. Energy Materials, 2023, 3.1.) both briefly described determining ionic (Li-ion) conductivity by alternating current impedance spectroscopy (section 'Ionic conductivity measurements' therein) and summarized values of the Li-ion conductivity of a number of different SEI components (Table 1 therein).

As used herein, and unless otherwise specified, the terms 'nanopillar layer' and 'the layer' are used as a shorthand for the 'layer comprising a plurality of nanopillars'.

In a first aspect, the present invention relates to a method comprising: a) providing a layer comprising a plurality of nanopillars, the nanopillars comprising: i) a core comprising Li or a Li-compound, and ii) a shell covering the core; and b) -after step a-replacing or chemically modifying a portion of the shell.

As for instance schematically illustrated in FIG 2, the core (30) is the central portion of a nanopillar (20). When the layer is later used in electrochemical applications, the core may primarily function as a (sacrificial) lithium reservoir, from which Li is depleted during stripping and is stored during plating. In embodiments, the core may substantially consist of Li, a Li alloy or a Li-compound. For example, at least 50 mol% of the core may be the Li, Li alloy or Li-compound; preferably at least 70 mol%, more preferably at least 85 mol%, still more preferably at least 95 mol%, yet still more preferably at least 98 mol%, most preferably at least 99 mol%, such as 100 mol%.

Again with reference to FIG 2, the shell (40) is a (substantially) continuous sheet/cover enveloping the core (30). The shell in turn may function as a SEI layer (cf. supra) in electrochemical applications. In embodiments, the shell may conformally cover the core (i.e. the shell follows the contours or shape of the core). In embodiments, the shell may also maintain a relatively uniform thickness. For example, the coating thickness may have a relative standard deviation (i.e. the ratio of the thickness' standard deviation to its arithmetic mean) of 10% or less, preferably 5% or less, more preferably 2% or less, most preferably 1% or less.

In embodiments, step a may comprise an electrodeposition from a non-aqueous bath (i.e. a solution from which electrodeposition can be performed and in which water is not (one of) the solvent(s)). Electrodeposition advantageously allows for a cost-effective and scalable production of the desired layer. In embodiments, the non-aqueous bath may comprise one or more organic solvents, such as 4G (tetraglyme), DEC (diethylene carbonate), DMSO (dimethylsulfoxide), FEC (fluoroethylene carbonate), EMITFSI (1-ethyl-3-methylimidazolium bis(trifluoromethylsulfonyl)imide), PC (propylene carbonate), DOL (dioxolane) or DME (dimethoxyethane); preferably 4G. In embodiments, the non-aqueous bath may further comprise one or more precursors for the electrodeposition of Li and/or a Li-compound. Typically, at least one of these precursors may be a Li-compound (e.g. a Li-salt), such as LiTFSI (lithium bis(trifluoromethanesulfonyl)imide), LiClO₄ (lithium perchlorate), LiBF₄ (lithium tetrafluoroborate), LiI (lithium iodide), LiOH (lithium hydroxide), LiFSI (lithium bis(fluorosulfonyl)imide), LiFTFSI (lithium bis(perfluoroethanesulfonyl)imide), LiFSI (lithium bis(perfluoroethanesulfonyl)imide), Li[(C₂F₅)BF₃] (lithium (pentafluoroethanesulfonyl)trifluoroborate), Li[(C₂F₅)BF₂(CN)] (lithium (pentafluoroethanesulfonyl)difluoroboronitrile), Li[B(CF₃)₄] (lithium tetrafluoroborate) or LiPF₆ (lithium hexafluorophosphate); preferably LiTFSI or LiClO₄; more preferably LiTFSI. In embodiment, the non-aqueous bath may comprise at least 0.1 M of the Li-compound precursors (in total, if there is more than one), preferably at least 0.5 M, more preferably at least 0.8 M, most preferably at least 1 M; such as up to 10 M or even higher. Other components in the non-aqueous bath-including any solvents, additives, etc.-may also participate as precursors in the electrodeposition. In embodiments, the electrodeposition may be performed at a current density of between 0.1 mA/cm² and 100 mA/cm², preferably between 0.2 mA/cm² and 80 mA/cm², more preferably between 0.4 mA/cm² and 60 mA/cm², still more preferably between 0.7 mA/cm² and 50 mA/cm², such as 1 mA/cm². In embodiments, the electrodeposition may be performed galvanostatically. In embodiments, after the electrodeposition, the layer may be washed; preferably with a dry solvent (e.g. dry 4G).

In embodiments, the electrodeposition may be performed on a conductive surface, such as a Cu, Ni or Li surface. A special case is where the conductive surface is a Li surface, as this allows to provide the layer-which is mainly composed of Li and/or Li-compounds-on a surface that is (mainly) metallic Li (e.g. minimizing any mismatches in physical characteristics that might occur between both). Notwithstanding, the use of Cu or Ni as surface for electrodeposition and as current collector in electrochemical applications is well known in the art and provides good results as well. In embodiments, the conductive surface may be the surface of a foil, of a layer carried on wafer, or any other surface suitable for performing electrodeposition thereon. Any substrate having a conductive surface is herein further referred to simply as a 'conductive substrate'.

Notwithstanding that the non-aqueous bath does not comprise water as a solvent, the non-aqueous bath may in embodiments comprise water (H₂O) as an additive. For example, the non-aqueous bath may comprise between 2.5 mM and 150 mM water, preferably between 5 mM and 100 mM, more preferably between 7.5 mM and 75 mM, still more preferably between 15 and 40 mM, such as 25 mM. In embodiments, step a may be performed as previously described by Aarts et al. (cf. supra), which is incorporated herein by reference. Adding water as an additive not only provides a convenient way to electrodeposit the desired layer (as previously reported by Aarts et al.), but-since water is used anyway-it also eliminates the need for a special glove box (e.g. Ar-filled) or dry room environment as needed for other approaches in the art. This in turn facilitates scaling up the fabrication process.

While layers as obtained after step a (e.g. in accordance with Aarts et al.) do offer considerable improvements over other approaches in the art, it was found as part of the present invention that they nevertheless still fall short in providing the desired performance as sacrificial Li thin films in lithium-ion electrochemical cells. More specifically, the reversibility of Li stripping and plating was found to be lacking, which impacts the cycle lifetime that can be achieved. Without being bound by theory, this was attributed to inadequate Li⁺ conductivity of the shell. Indeed, the shell after step a is typically mostly made up of Li₂O and LiOH, which are known to be poor Li⁺ conductors. Accordingly, since the nanopillar's core is generally completely covered by the shell, transport of Li⁺ from (e.g. during stripping) and/or to (e.g. during plating) the core have to occur through the shell. Thus, if the shell is not sufficiently Li⁺ conducting, the transport cannot occur efficiently, and the reversibility is impacted.

For this reason, but also because there is room to further improve the chemical (e.g. with respect the electrolyte) and/or mechanical stability (e.g. support/strength) of the shell, at least a portion of the shell is in accordance with the present invention in step b intentionally/purposefully replaced or chemically modified to obtain different properties (including e.g. improved Li⁺ conductivity, chemical stability and/or mechanical stability; among others).

Accordingly, step b may be performed such that said portion has after step b a higher Li⁺ conductivity than before step b. In embodiments, step b may be performed such that said portion has after step b a Li⁺ conductivity of at least 10⁻¹⁰ S/cm (i.e. the portion is at least a moderate Li⁺ conductor), preferably at least 10⁻⁶ S/cm (i.e. the portion is a good Li⁺ conductor). In alternative or complementary embodiments, the layer may be made for use with a certain electrolyte, and step b may be performed such that said portion is after step b more chemically stable (i.e. better able to resist chemical reactions that would deteriorate the portion) with respect to said electrolyte than before step b. In yet alternative or complementary embodiments, step b may be performed such that said portion has after step b a higher mechanical stability than before step b. A higher mechanical stability may be experimentally verified by performing (prolonged) cycling experiments (in which a portion having lower mechanical stability may show signs of mechanical degradation earlier than a portion having higher mechanical stability); and/or through physical characterization measurements (e.g. indentation measurements can provide a measure of mechanical strength).

In embodiments, step b may be performed such that the shell (e.g. at least said portion thereof) is predominantly (i.e. more than 50 mol%) made up of Li-compounds (or a single Li-compound) other than LiOH (lithium hydroxide) and Li₂O (lithium oxide). In embodiments, said Li-compounds may be one or more of Li₂CO₃ (lithium carbonate), LiPON (lithium phosphorus oxynitride), Li₃N (lithium nitride), Li₂FPO₃ (lithium fluorophosphate), Li₃PO₄ (lithium phosphate), CH₂=CHP(O)(OLi)₂ (vinyl lithium phosphonate), (C₂H₃O₃PLi₂)ₙ (polyvinyl lithium phosphonate), CH₂=CHSO₃Li (vinyl lithium sulfonate) and (C₂H₃SO₃Li)ₙ (polyvinyl lithium sulfonate); preferably LiPON and/or Li₃N. As noted above, the shell is after step a typically mostly made up of Li₂O and LiOH; even while it may also include smaller amount of other Li-compounds, such as LiH, Li₂S, LiF and Li₃N. However, at least Li₂O, LiOH and LiF are known to be poor Li⁺ conductors. To improve the Li⁺ conduction of said portion, is therefore advantageous that step b significantly reduces their content in the portion. The list of Li₂CO₃, LiPON, Li₃N, etc. are examples of moderate to good Li⁺ conductors and thus advantageously contribute to improving the portion's Li⁺ conductivity. Li-polymers like polyvinyl lithium phosphonate and polyvinyl lithium sulfonate have a further benefit in that they can allow further polymerization and surface film formation.

In embodiments, step b may comprise one or more of: a vacuum deposition, a gas exposure, a wet chemical process, an electrochemical process or a plasma treatment. There are thus advantageously several ways to make this alteration, using techniques that are well-developed and can be done on an industrial scale.

In embodiments, the vacuum deposition may comprise a chemical vapour deposition (CVD) or a physical vapour deposition (PVD) (e.g. sputtering or thermal evaporation). In embodiments, the vacuum deposition may comprise depositing Li₃PO₄ (lithium phosphate), LiBO₂ (lithium metaborate), LiPON (lithium phosphorus oxynitride), LiBON (lithium boron oxynitride) or LLZO (lithium lanthanum zirconium oxide).

In embodiments, the gas exposure may comprise a reaction with a gaseous species (such as CO₂). Exemplary reactions include:

Li₂O(s) + CO₂(*g*) → Li₂CO₃(*s*)

LiOH(s) + CO₂(*g*) → Li₂CO₃(*s*) + H₂O

In embodiments, the wet chemical process may comprise a reaction with phosphoric acid, a phosphoric acid derivative or a phosphonic acid derivative; such as H₃PO₄ (phosphoric acid), TMP (trimethyl phosphate), TEP (triethyl phosphate), VPA (vinylphosphonic acid) or PVPA (poly(vinylphosphonic acid)). Exemplary reactions include:

3 LiOH(*s*) + H₃PO₄ → Li₃PO₄(*s*) + 3 H₂O

3 LiOH(*s*) + (CH₃O)₃PO → Li₃PO₄(*s*) + 3 CH₃OH

3 LiOH(*s*) + (C₂H₅O)₃PO → Li₃PO₄(*s*) + 3 C₂H₅OH

2 LiOH(*s*) + H₂PO₃F → Li₂FPO₃(*s*) + 2 H₂O

2 LiOH(*s*) + CH₂=CHP(O)(OH)₂ → CH₂=CHP(O)(OLi)₂(*s*) + 2 H₂O

2n LiOH(*s*) + (CH₂=CHP(O)(OH)₂)*ₙ* → (CH₂=CHP(O)(OLi)₂)*ₙ* + 2n H₂O

In other embodiments, the wet chemical process may comprise a reaction with a sulfonic acid derivative; such as VSA (vinylsulfonic acid) or PVSA (poly(vinylsulfonic acid)). Exemplary reactions include:

LiOH(*s*) + CH₂=CHSO₃H → CH₂=CHSO₃Li(*s*) + H₂O

LiOH(*s*) + (CH₂=CHSO₃H)*ₙ* → (CH₂=CHSO₃Li)*ₙ*(s) + n H₂O

In still other embodiments, the wet chemical process may comprise a reaction yielding fluorinated or borylated Li-compounds; such as e.g. reaction with FEC (e.g. yielding LiF), or a reaction with boric acid (H₃BO₃) or a boric acid derivative (e.g. trimethyl borate, B(OCH₃)₃).

In embodiments, the plasma treatment may comprise a non-reactive plasma etching (e.g. an Ar plasma etching) and/or a reactive plasma treatment (e.g. an N₂ plasma treatment).

In some embodiments, step b may comprise a combination of more than one of aforementioned treatments. Examples include removal of the portion via a non-reactive plasma etching, followed by conversion of the exposed core via a reactive plasma treatment; removal of the portion via a non-reactive plasma etching, followed by vacuum deposition of a Li-compound; a wet chemical process converting the portion to a first Li-compound (e.g. Li₃PO₄), followed by a reactive plasma treatment to further convert it to a further Li-compound (e.g. LiPON); etc.

In some embodiments, only a top portion of the shell may be replaced or chemically modified in step b. In these embodiments, the side wall portions are thus left unaltered as compared to before step b (see also Example 1). In other embodiments, the full shell (i.e. including both the top and side wall portions) may be replaced or chemically modified in step b (see also Example 2).

In embodiments, the layer may have a columnar morphology. For example, the nanopillars may be substantially aligned (e.g. in a direction perpendicular to the substrate on which they are provided). In embodiments, the layer may have a thickness (t in FIG 2) of from 1 µm to 100 µm, preferably from 2 µm to 70 µm, more preferably from 3 µm to 50 µm, still more preferably from 5 µm to 30 µm. The approach of the present invention may in particular be advantageous for forming layers having a thickness from 1 µm to 30 µm. In embodiments, the nanopillars may have an average (i.e. the arithmetic mean) width (w in FIG 2) of from 200 nm to 5 µm, preferably from 300 nm to 2.5 µm, such as from 400 nm to 750 nm. In embodiments, the nanopillars may have an average (i.e. the arithmetic mean) centre-to-centre distance (or 'pitch') from 200 nm to 5 µm, preferably from 300 nm to 2.5 µm, such as from 400 nm to 750 nm. The above characteristics refer to the layer after step b, however they are generally not particularly impacted by step b (e.g. the layer thickness might be slightly reduced, depending on how step b is performed, but this is typically not more than a few % at most) and thus also substantially apply to the layer before step b.

In embodiments, step a may comprise controlling the nanopillar width (e.g. the average and/or variation thereof) by modulating the electrodeposition parameters. In particular the applied voltage and current density can advantageously be used to modulate the nanopillar width (see also Example 3a).

In embodiments, the method may comprise a further step-before and/or after step b, preferably after step b-of reducing the residual moisture content in the layer. Lowering the moisture content (e.g. through vacuum drying)-compared to the as-obtained layer (after washing with a dry solvent) in step a-was advantageously found to better maintain the structural integrity-and thus electrochemical performance-of the layer (see also Example 3b).

In embodiments, any feature of any embodiment of the first aspect may independently be as correspondingly described for any embodiment of any of the other aspects.

In a second aspect, the present invention relates to a layer comprising a plurality of nanopillars, obtainable by the method according to any embodiment of the first aspect.

Said layer may typically comprise a plurality of nanopillars, the nanopillars comprising: i) a core comprising Li or a Li-compound, and ii) a shell covering the core. In some embodiments (particularly where the top portion of the shell is not floating; see also Example 2c), the nanopillars may in some instances further comprise a gap or void (e.g. replacing a stripped part of the core).

In embodiments, at least a portion of the shell may have a Li⁺ conductivity of at least 10⁻¹⁰ S/cm, preferably at least 10⁻⁶ S/cm. In embodiments, the portion of the shell having said Li⁺ conductivity may span at least 10% of the surface area covered by the shell; preferably at least 15%, more preferably at least 20%, still more preferably at least 25%. A non-negligible portion of the shell may thus advantageously have a moderate to good Li⁺ conductivity.

In embodiments, the layer may be for use with a certain electrolyte, and the shell may have a first portion and a second portion (i.e. it can be conceptually divided so as to comprise said first and second portion), the second portion having a higher chemical stability with respect to said electrolyte than the first portion. In embodiments, said first and second portion may each span at least 10% of the surface area covered by the shell; preferably at least 15%, more preferably at least 20%, still more preferably at least 25%. A non-negligible portion of the shell may thus advantageously have an improved chemical stability compared to another portion of the shell.

In embodiments, the shell may have a first portion and a second portion, the second portion having a higher mechanical stability than the first portion. In embodiments, said first and second portion may each span at least 10% of the surface area covered by the shell; preferably at least 15%, more preferably at least 20%, still more preferably at least 25%. A non-negligible portion of the shell may thus advantageously have an improved mechanical stability compared to another portion of the shell.

In embodiments, any feature of any embodiment of the second aspect may independently be as correspondingly described for any embodiment of any of the other aspects.

In a third aspect, the present invention relates to an electrode comprising the layer according to any embodiment of the second aspect.

In embodiments, the electrode may be for use in an electrochemical cell and/or device.

In embodiments, the electrode may be an electrode with excess Li (e.g. excess sacrificial Li).

In embodiments, the electrode may be an anode or a cathode, preferably an anode.

In embodiments, said layer may in the electrode be on a conductive substrate; preferably on a Li surface of the conductive substrate (cf. supra).

In embodiments, any feature of any embodiment of the third aspect may independently be as correspondingly described for any embodiment of any of the other aspects.

In a fourth aspect, the present invention relates to a method for operating an electrode as defined in the third aspect, comprising a sequence of: a') at least partially stripping Li from the core, and b') (re)plating the core with Li.

'Stripping Li from the core' refers to (electro)chemically removing Li from the core (typically from the metallic Li or Li-compound(s) therein); e.g. towards the electrolyte (in the form of Li'). 'At least partially stripping Li from the core' refers to the fact that the core need not be stripped completely: in any case, there may be typically at least some portion of the Li-atoms in the core which cannot normally be mobilized by stripping (i.e. which cannot be removed (electro)chemically under normal operating conditions); but even so, it suffices that at least some of the mobilizable Li is stripped in step a'. (Re)plating the core with Li refers to (electro)chemically (re)depositing/(re)introducing Li onto/into the core (typically as metallic Li or a Li-compound); e.g. from Li⁺ in the electrolyte. Similarly as for stripping, step b' does not necessarily require rebuilding the core completely (e.g. to full saturation); it suffices that at least some of the core is recovered. In some instances, it may even occur that the core after step b' contains more Li than before step a'.

In embodiments, step a' and/or b' may independently be performed galvanostatically or potentiostatically; preferably both galvanostatically or potentiostatically. Performing step a' and/or b' galvanostatically may comprise applying a current density between 0.01 mA/cm² and 100 mA/cm², preferably between 0.05 mA/cm² and 75 mA/cm², more preferably between 0.1 mA/cm² and 50 mA/cm², still more preferably 0.1 mA/cm² and 4 mA/cm², such as 2 mA/cm². The effect of the current density may in general depend on various experimental parameters, such as the electrolyte (e.g. liquid vs. solid, the liquid solvent or solid matrix, the Li-compound therein; etc.), the electrochemical setup, etc. Notwithstanding, suitable values can always at least be determined by trial-and-error. Performing step a' and/or b' potentiostatically may comprise applying a voltage between 0 V and 1.5 V vs Li⁺/Li, preferably between 0 V and 0.1 V vs Li⁺/Li, such as 1 V vs Li⁺/Li.

In embodiments, step a' and b' do not necessarily have to performed in that order. For example, when the core is not fully saturated, the method may start with step b' and step a' may be performed afterwards.

In embodiments, the method may comprise cycling through step a' and b' a plurality of times; such as at least 5 times, preferably at least 10 times, more preferably at least 20 times, still more preferably at least 50 times, yet still more preferably at least 100 times.

In embodiments, the shell may have a top portion, and the top portion may be floating with respect to the core. Indeed, the core may undergo significant volume changes during stripping (reducing in size) and (re)plating (growing in size). It is therefore advantageous if the top portion is not firmly fixed to the rest of the shell, but can follow these volume changes by moving down and up accordingly, acting as a 'floating layer'. This advantageously allows the top portion to remain in contact with the core, avoiding any excessive gaps therebetween that would otherwise hinder/prevent Li-transport through the top portion (see also Example 2c). In case of a liquid electrolyte-or more generally: a flowable electrolyte-, the electrolyte can further follow the top portion (e.g. filling any space left it as the top portion moves down, or receding as the top portion moves up) and likewise maintain direct contact between the electrolyte and the top portion (see also Example 1b and Example 2b)

In embodiments, any feature of any embodiment of the fourth aspect may independently be as correspondingly described for any embodiment of any of the other aspects.

In a fifth aspect, the present invention relates to an electrochemical device comprising the electrode according to any embodiment of the third aspect.

In embodiments, the electrochemical device may comprise one or more electrochemical cells.

In embodiments, the electrochemical device may comprise a liquid electrolyte or a solid electrolyte.

'Liquid electrolyte' refers to an electrolyte medium in a fluid phase at the operating temperature of the electrochemical device. It typically comprises a solvent (mixture) and a dissolved Li-compound (e.g. Li-salt) capable of conducting Li⁺ ions. The solvents and Li-compounds-including their concentrations-used for the electroplating bath (cf. supra) may typically also suitable for use as a liquid electrolyte. Preferred examples of solvent( mixture)s include (dry) 4G, (dry) 4G and 2 vol% FEC, EMITFSI, PC and 1:1 DOL/DME. Preferred examples of Li-compounds include LiTFSI and LiClO₄.

'Solid electrolyte' refers to an electrolyte medium in a solid phase at the operating temperature of the electrochemical device. The typically comprise a solid Li-compound capable of conducting Li⁺ ions. These solid Li-compounds may generally be similar to the ones used for artificial SEI layers and for predominantly making up the altered shell portion (cf. supra). Specific examples include Li₃PO₄ (lithium phosphate), LiBO₂ (lithium metaborate), LiPON (lithium phosphorus oxynitride), LiBON (lithium boron oxynitride), LLZO (lithium lanthanum zirconium oxide), Li₃N, a sulphide-based electrolyte (e.g. Li₂S-P₂S₅) or a polymer-based electrolyte; preferably LiPON, LLZO, Li₃N (lithium nitride) or a polymer-based electrolyte. The solvents and Li-compounds-including their concentrations-used for the electroplating bath (cf. supra) may be typically also suitable for use as a liquid electrolyte.

In embodiments, the electrochemical device may be a battery; preferably a solid-state battery. In embodiments, the battery may be a lithium metal battery (with solid or liquid electrolyte), lithium-sulphur battery or lithium-air battery. A solid-state battery is a battery wherein the electrolyte is primarily in the solid phase; this may advantageously typically enhance their safety and energy density compared to conventional liquid- (or gel-)based devices.

In other embodiments, the electrochemical device may be a device for lithium-mediated nitrogen fixation.

In embodiments, any feature of any embodiment of the fifth aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: Layer comprising a plurality of nanopillars with Li⁺ insulating side wall portions and Li⁺ conducting top portion

### Example 1a: Fabrication

As schematically illustrated in FIG 1 and FIG 2, a layer (10) comprising a plurality of nanopillars (20) was first provided. Each nanopillar comprised a core (30) comprising Li (or a Li-compound), and a shell (40) covering the core (30). This initial layer was obtained via an electrodeposition process from a non-aqueous bath comprising water as an additive, in line with the process previously described by Aarts et al. (cf. supra). To this end, a setup as further described below with reference to FIG 6 was for instance used.

More specifically, various thicknesses (including i.a. 3 µm, 10 µm, 20 µm and 30 µm) of a layer (10) were electrodeposited at 1 mA/cm² from 1M LiTFSI in 4G with 25 mM H₂O on a conductive substrate (51), followed by washing with a dry solvent (e.g. dry 4G). The conductive substrate (51) could be a wafer-supported Cu layer (e.g. Si/SiO₂/20 nm Ti/100 nm Cu) or a Cu foil (e.g. a commercial 10 µm thick Cu foil). This resulted-as confirmed (but not included in the drawings) by SEM, XPS measurements and soft X-ray emission spectrometry-in the formation of a layer (10) having a columnar morphology, with nanopillars (20) having a pillar-like Li core (30) and a Li-compound shell (40) conformally covering the core (30); as schematically depicted in FIG 1 and FIG 2. The shell (40) formed during this initial electrodeposition step was made up of mainly Li₂O and LiOH-but could also include LiH, Li₂S, LiF and Li₃N-, making it a relatively poor Li⁺ conductor (e.g. Li₂O has a Li⁺ conductivity in the order of 10⁻¹² S/cm). The poor Li⁺ conductivity negatively affected the cycling stability and cycle life of the layer (10), in particular reducing the reversibility of stripping and plating. Additionally, also the chemical stability and/or mechanical stability of this initial shell (40) could be a concern. As such, mechanical failure of the shell after extended cycling, and subsequent dendritic growth, remained an issue.

A part of this initial shell (40) was therefore replaced or chemically modified to create a portion (42) having improved performance (e.g. higher Li⁺ conductivity, chemical and/or mechanical stability, etc.). In the present example, this alteration specifically targeted the top of the shell (40) while leaving the side wall portions (41) largely unmodified (and thus Li⁺ insulating). To that end,-as shown in FIG 3-the top of the shell(s) (40) was selectively removed (e.g. using an Ar (argon) plasma etching); thereby exposing the underlying Li core (30) of the nanopillars (20).

Next,-as shown in FIG 4 and FIG 5-a new top portion (42) of the shell (40) was formed from a material that is a good Li⁺ conductor. This was achieved either by a N₂ (nitrogen) plasma treatment on the exposed core (30), chemically modifying its top surface to Li₃N (which exhibits a good Li⁺ conductivity of about 10⁻⁴ S/cm). Alternatively, the new top portion (42) was transformed to LiPO by either physical vapour deposition or wet chemical conversion (e.g. using TMP (trimethyl phosphate), TEP (triethyl phosphate) or phosphoric acid as a reactant), followed by exposure to a reactive N₂ plasma to yield LiPON. LiPON is likewise a good Li⁺ conductor and is widely utilised as solid electrolyte material.

In still another alternative, the top portion (42) could be removed and replaced in one step by a reactive plasma treatment that is able to either react with the original top portion (42) and/or strip the top portion (42) and simultaneously react with the exposed core (30), such as by using a reactive N₂ plasma to form a Li₃N layer directly (as opposed to in two steps as described above).

### Example 1b: Operation with a liquid electrolyte

The fabricated layer (10) on the conductive substrate (51) was subsequently operated as an electrode (50)-more specially as a Li metal anode-in an electrochemical device (60) employing a liquid electrolyte (71), as schematically depicted in FIG 6. The electrochemical device (60) further comprised a Li cathode (81) and Li reference electrode (82) (both in the form of a Li foil). The operation involved cycles of Li stripping and (re)plating. Several liquid electrolytes (71) were successfully tested, including: 1M LiTFSI in dry 4G, 1M LiTFSI in dry 4G and 2 vol% FEC, 1M LiTFSI in EMITFSI, 1M LiClO₄ in PC and 1M LiTFSI in 1:1 DOL/DME. Alternatively, operation of the fabricated layer (10) was also tested in a coin cell setup (i.e. a two-electrode setup, without the Li reference electrode).

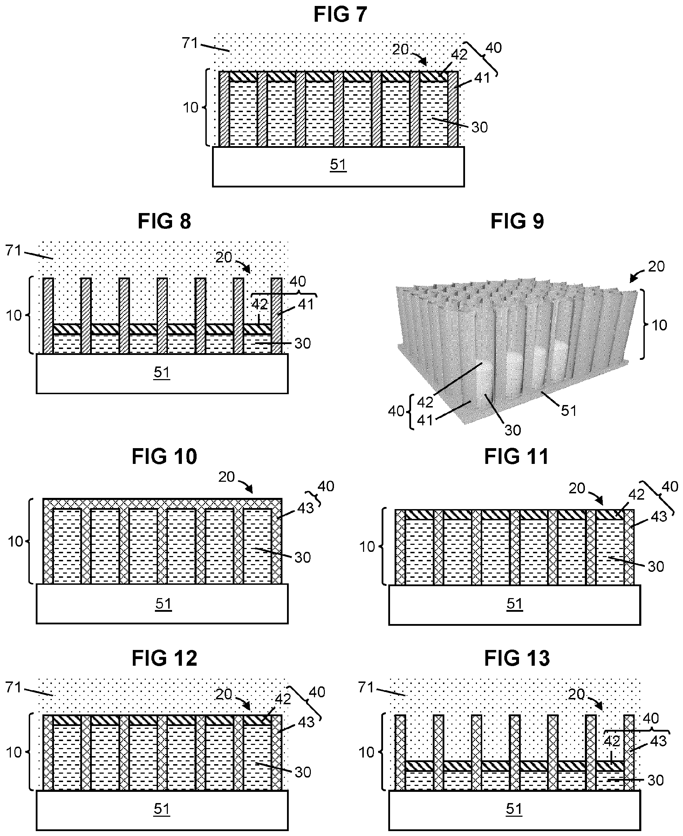

Starting from a 'full' core, as illustrated in FIG 7, Li stripping was done by progressively removing Li electrochemically from the core (30) of the nanopillars (20). Due to the high Li⁺ conductivity of the top portion (42) and the insulating nature of the side wall portions (41), Li⁺ ions preferentially exit the nanopillars (20) vertically through the top. The shell structure (40), especially the side walls (41), remained substantially intact-as confirmed (but not included in the drawings) by SEM-, acting as a compartment. Notwithstanding, as Li was being stripped, the top portion (42) could detach from the side wall portions (41) and effectively becoming 'floating' on the receding core (30); as illustrated in FIG 8 and FIG 9. In this case, the liquid electrolyte (71) fills the space left by the floating top portion (42) as it is moving down between the side wall portions (41). From slow (e.g. at 2 mAh/cm²) electrochemical stripping experiments, it was observed that about 50-60% (depending i.a. on the electrolyte in which the experiment was performed) of the total amount of Li in the core (30) could be mobilized, and is thus able to actively participate in the electrochemical cell.

Conversely, during Li plating (e.g. at 0.1-4 mA/cm²), Li⁺ ions from the liquid electrolyte (71) entered through the shell (40) into the nanopillars (20) and plated onto the core (30), causing it to grow back within the confines of the shell (40). Again, due to the conductive top portion (42) and insulating side walls (41), these Li⁺ ions preferentially entered vertically through the top portion (42); with the floating top portion (42) moving up with the core (30) as the latter was growing. The shell (40) as a whole prevented Li plating outside the core (30) and suppressed dendrite formation extending outside the compartmentalized nanopillars (20). Eventually the core (30) was substantially reformed, and the layer (10) was back to the state as shown in FIG 7.

Both stripping and plating could be done galvanostatically (e.g. at 0.1-4 mA/cm²) or potentiostatically (e.g. at 1 V vs Li⁺/Li).

Overall, promoted by the improved Li⁺ transport through the shell (40) facilitated by the Li⁺ conducting top portion (42), the altered layer (10) allowed reversible and symmetric Li stripping and plating-that remained stable and durable over extended cycling-within the volume defined by each nanopillar (20). In other words: the alteration yielded a better performing SEI-layer.

### Example 2: Layer comprising a plurality of nanopillars with Li⁺ conducting side walls and top portion

### Example 2a: Fabrication

Example 1a was repeated, but rather than only the top portion (42), the complete shell (40) was altered. The layer (10) with the initial shell (40) was therefore subjected to gas exposure (e.g. CO₂) or a wet chemical treatment (e.g. using phosphoric acid derivatives or sulfonic acid derivates) to chemically modify it. This converted the initial shell 'portions' (41 in FIG 1 and FIG 2; here rather the entire shell)-being made up mainly of Li₂O and LiOH; cf. supra-into shell (40) with altered 'portions' (43); as illustrated in FIG 10. Depending on the selected treatment, the shell (40) could be altered to comprise one or more of Li₂CO₃, Li₂FPO₃, Li3PO₄, CH₂=CHP(O)(OLi)₂, (C₂H₃O₃PLi₂)ₙ, CH₂=CHSO₃Li, (C₂H₃SO₃Li)ₙ, etc. While these generally improved the mechanical and chemical stability compared to the initial shell, most exhibit only moderate Li⁺ conductivity (e.g. between 10⁻¹⁰ and 10⁶ S/cm).

Accordingly, the top surface could optionally be further altered as previously described under Example 1a, thereby creating a distinct top portion (42) with even higher Li⁺ conductivity; as schematically depicted in FIG 11. This results in a structure with a more stable, moderately Li⁺ conductive side wall portions (43) and a further optimized Li⁺ conductive top portion (42).

### Example 2b: Operation with a liquid electrolyte

Similar to Example 1b and likewise schematically depicted in FIG 6, the layer (10) fabricated according to Example 2a on the conductive substrate (51) could also subsequently be operated as an electrode (50) in an electrochemical device (60) employing a liquid electrolyte (71).

Starting again from a 'full' core, as illustrated in FIG 12, Li was electrochemically stripped from the core (30). Differing from Example 1b, because the entire modified shell (40) exhibited some Li⁺ conductivity, ions could exit not only through the top surface (42) but also laterally through the side wall portions (43) of the altered shell (40). Here as well, as Li was being stripped, the top portion (42) could detach from the side wall portions (43), effectively becoming 'floating' on the receding core (30); as illustrated in FIG 13. Again, the liquid electrolyte (71) filled the space left by the floating top portion (42) as it was moving down between the side wall portions (41). The enhanced stability (chemically and/or mechanically) of the altered side wall portions (43) further helped maintain the structural integrity of the nanopillars (20) during cycling, reducing the risk of mechanical failure of the shell (40) compared to Example 1b.

During Li plating, Li⁺ ions from the liquid electrolyte (71) entered the nanopillar structure (20) to plate onto the core (30). Consistent with stripping, ions could enter both vertically through the top portion (42) and laterally through the moderately conductive side wall portions (43). Plating accordingly occurred within the confines of the more robust shell (40). Eventually the core (30) was substantially reformed, and the layer (10) was back to the state as shown in FIG 12.

### Example 2c: Operation with a solid electrolyte

Alternatively-but also schematically depicted in FIG 6-, the layer (10) fabricated according to Example 2a on the conductive substrate (51) could subsequently be operated as an electrode (50) in an electrochemical device (60), but employing a solid electrolyte (72).

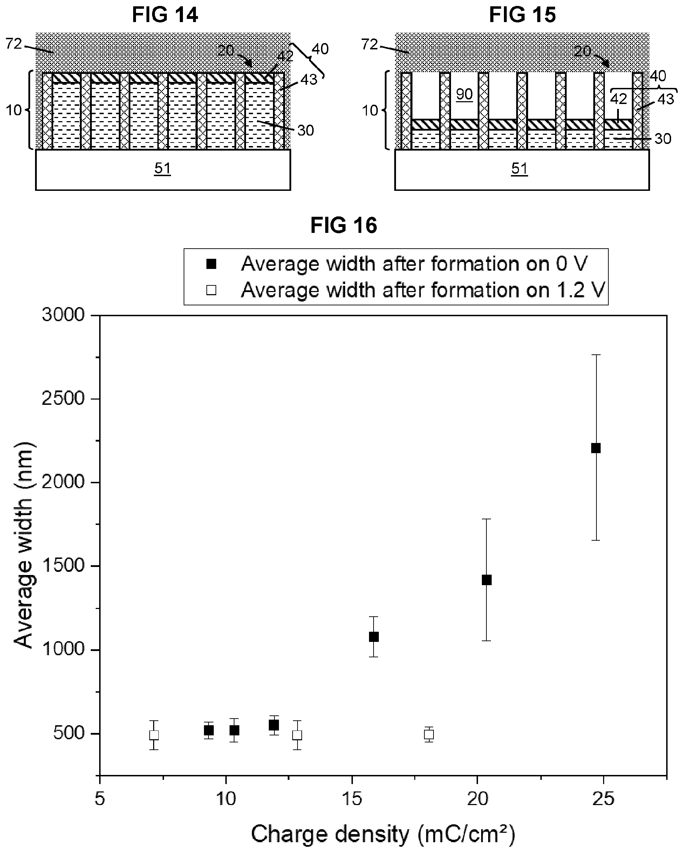

The cycling behaviour in this case is illustrated in FIG 14 and FIG 15 and is substantially similar to what was described in Example 2b, except that the solid electrolyte (72) does not fill the space left by the floating top portion (42), if it does float; or by the receding core (30), if the top portion (42) does not float. A gap (90) thus arises which hinders transport of Li⁺ in the vertical direction in and out of the nanopore (20), so that said transport rather needs to occur substantially through the side wall portions (43). In this case, it is thus extra important that the side wall portions (43) are not poorly Li⁺ conducting, explaining why in combination with a solid electrolyte a layer as in Example 2a is preferred over one as in Example 1a.

### Example 3: Additional parameters involved in the formation of the initial layer comprising the plurality of nanopillars

### Example 3a: Controlling the nanopillar width

This example relates to the initial electrodeposition step used to provide the layer comprising the plurality of nanopillars, as described in Example 1a and Example 2a. Specifically, it was investigated how the morphology-particularly the average width (w)-of the nanopillars could be controlled.

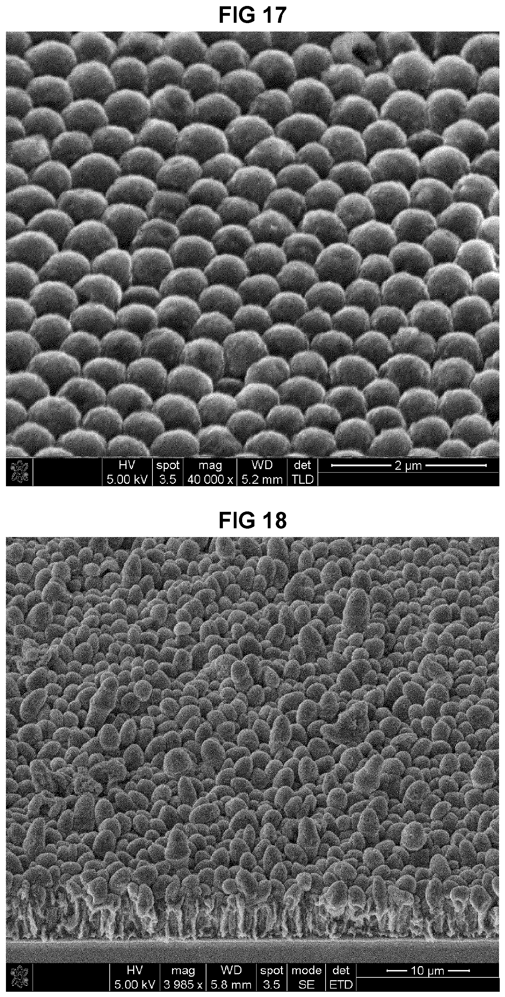

It was found that the nanopillar width (w) was influenced by the applied voltage and the current density during electrodeposition. FIG 16 shows the analysis results of SEM of the 10 µm layers obtained by electrodeposition at 1 mA/cm² from 1M LiTFSI in 4G with 25 mM H₂O. As can be seen, for 0 V, the average nanopillar width (and the variation) substantially increased with rising current density, from about 500 nm to about 2250 nm. Conversely, for 1.2 V, the average tube diameter (and the variation) remained substantially constant at about 500 nm. FIG 17 and FIG 18 show illustrative SEM images taken of samples during the above experiment, namely respectively after 100 s and 2600 s formation time at 0V before plating was started.

This demonstrated that modulating the electrodeposition parameters provides a means to control and tailor the nanopillar morphology-and in particular their average width (w)-during the formation of the initial layer.

### Example 3b: Effect of moisture content in the nanopillar layer

Further relating to the initial layer formation via electrodeposition, the effect of residual moisture content within the deposited layer itself was considered.

To this end, an experiment was performed in which several 20 µm layer were electrodeposited at 1 mA/cm² from 1M LiTFSI in 4G with 25 mM water as additive, followed by washing with dry solvent. A first batch then underwent electrochemical studies as is, while a second batch was first vacuum dried for 20 hours before the electrochemical studies were performed thereon. These studies involved complete progressive stripping of Li by applying a positive current, followed by replating of 5 µm Li at 0.1 mA/cm² by applying a negative current. Before and after each of these steps, digital imaging and SEM was performed on the samples.

It was observed that the amount of residual moisture influenced the subsequent performance. Namely, by lowering the moisture content (through the vacuum drying), the structural integrity-and thus electrochemical performance-was better maintained.

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

## Claims

1. A method, comprising:
a) providing a layer (10) comprising a plurality of nanopillars (20), the nanopillars (20) comprising:
i) a core (30) comprising Li or a Li-compound, and
ii) a shell (40) covering the core (30); and
b) -after step a-replacing or chemically modifying a portion (42) of the shell.

2. The method according to claim 1, wherein step a comprises an electrodeposition from a non-aqueous bath comprising water as an additive.

3. The method according to any of claims 1 to 2, wherein step b comprises one or more of: a vacuum deposition, a gas exposure, a wet chemical process, an electrochemical process or a plasma treatment.

4. The method according to any of claims 1 to 3, wherein step b is performed such that said portion (42) has after step b a Li⁺ conductivity of at least 10⁻¹⁰ S/cm, preferably at least 10⁻⁶ S/cm.

5. The method according to any of claims 1 to 4, wherein the layer (10) is made for use with a certain electrolyte, and wherein step b is performed such that said portion (42) is after step b more chemically stable with respect to said electrolyte than before step b.

6. The method according to any of claims 1 to 5, wherein step b is performed such that said portion (42) is predominantly made up of Li-compounds other than LiOH and Li₂O.

7. The method according claim 6, wherein said Li-compounds are one or more of Li₂CO₃, LiPON, Li₃N, Li₂FPO₃, Li₃PO₄, CH₂=CHP(O)(OLi)₂, (C₂H₃O₃PLi₂)ₙ, CH₂=CHSO₃Li and (C₂H₃SO₃Li)ₙ; preferably LiPON and/or Li₃N.

8. The method according to any of claims 1 to 7, wherein the layer (10) has a columnar morphology.

9. A layer (10) comprising a plurality of nanopillars (20), obtainable by the method according to any of claims 1 to 8.

10. An electrode (50) comprising the layer (10) according to claim 9.

11. A method for operating an electrode (50) as defined in claim 10, comprising a sequence of:
a') at least partially stripping Li from the core (30), and
b') plating the core (30) with Li.

12. The method according to claim 11, wherein the shell (40) has a top portion (42) and the top portion (42) is floating with respect to the core (30).

13. An electrochemical device (60) comprising the electrode (50) according to claim 10.

14. The electrochemical device (60) according to claim 13, comprising a liquid electrolyte (71) or a solid electrolyte (72).

15. The electrochemical device (60) according to any of claims 13 to 14, being a battery; preferably a solid-state battery.
